# EUROPÄISCHE PATENTSCHRIFT

(11) **EP 0 865 134 B1**
(45) Veröffentlichungstag und Bekanntmachung des Hinweises auf die Patenterteilung: **27.11.2002**
(21) Anmeldenummer: 98104511.5
(22) Anmeldetag: 12.03.1998
(51) Int. Cl.: H02G 9/06, H02G 15/113

(54) **Aus zwei Halbschalen bestehendes Reparaturstück**
Repair piece comprising two half-shells
Pièce de réparation à deux demi-coquilles

(30) Priorität: 12.03.1997 DE 19710251
(43) Veröffentlichungstag der Anmeldung: 16.09.1998
(73) Patentinhaber: gabo Systemtechnik GmbH, 94559 Niederwinkling (DE)
(72) Erfinder: Bauer, Peter, 94357 Konzell (DE); Lederer, Roland, 93049 Regensburg (DE); Helf, Walter, 94315 Straubing (DE)

(56) Entgegenhaltungen:
- EP-A- 0 521 322
- DE-A- 2 304 852
- DE-A- 3 302 339
- DE-U- 9 001 931

## Beschreibung

Die Erfindung betrifft ein aus zwei Halbschalen bestehendes Reparaturstück für Kabelkanalrohre bei dem an den Berührungsflächen der beiden Halbschalen jeweils auf der einen Seite eine hinterschnittene Nut vorgesehen ist, in die eine Feder der Stirnseite der anderen Halbschale eingreift.

Aus zwei Halbschalen bestehende Kabelkanal-, bzw. Kabelschutzrohre, sogen. Reparaturstücke dieser Art sind u.a. aus der DE 23 04 852 A, DE 33 02 339 A und der DE 42 18 526 A bekannt. Die Reparaturstücke sind aus Kunststoff, vorzugsweise PVC gefertigt und betreffen sämtlich gas- und wasserdichte Verbindungen zwischen den beiden Halbschalen.

Der nächstliegende Stand der Technik ist in DE 33 02 339 A beschrieben.

Für viele Anwendungsfälle wird jedoch ein nur kurzzeitiger Schutz der Reparaturstelle benötigt, was zu erheblichen Ausgaben für die fest verrastenden, also dauerhaft unlösbaren dichten Verbindungen der beiden Halbschalen der Reparaturstücke führt. Eine Wiederverwendung solcher Reparaturstücke, nachdem sie ihre Aufgabe erfüllt haben, beispielsweise während Umbauarbeiten am Kabelnetz, ist somit nicht möglich.

Der Erfindung, wie sie in den Ansprüchen beschrieben ist, liegt die Aufgabe zugrunde, ein solches Reparaturstück zu schaffen, das nach Gebrauch wiederverwendbar ist.

Die Aufgabe wird durch die Merkmale des kennzeichnenden Teils des Anspruchs 1 gelöst.

Die mit der Erfindung erzielten Vorteile liegen insbesondere in einer wirtschaftlichen Herstellung der Reparaturstücke sowie deren Eigenschaften, wie Wiederverwendbarkeit, Einfachheit der Handhabung auf der Baustelle, Dichtheit gegen Sand und in gewissem Umfange auch gegen Wasser, leichte Reinigung, sowie einfacher Lagerhaltung.

Die Erfindung ist nachstehend anhand eines in den Abbildungen dargestellten Ausführungsbeispieles näher erläutert.

Es zeigt:
- Fig. 1:: einen Schnitt durch die Verbindungsstelle,
- Fig. 2:: eine Darstellung des Ausschnittes "X" der Fig.1,
- Fig. 3:: ein Detail der Fig. 1 und 2,
- Fig. 4:: eine Variante der Erfindung in Ruhestellung,
- Fig. 5:: die Variante gem. Fig. 4 in Arbeitsstellung und

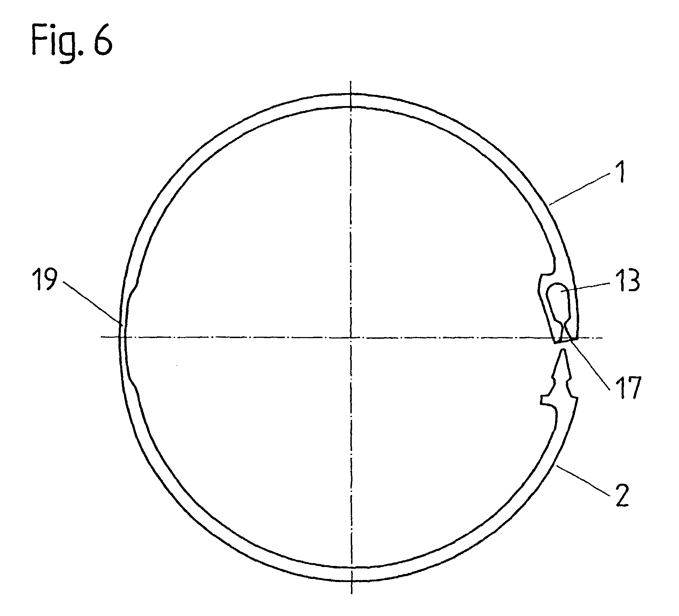

- Fig. 6:: eine weitere Ausführungsvariante

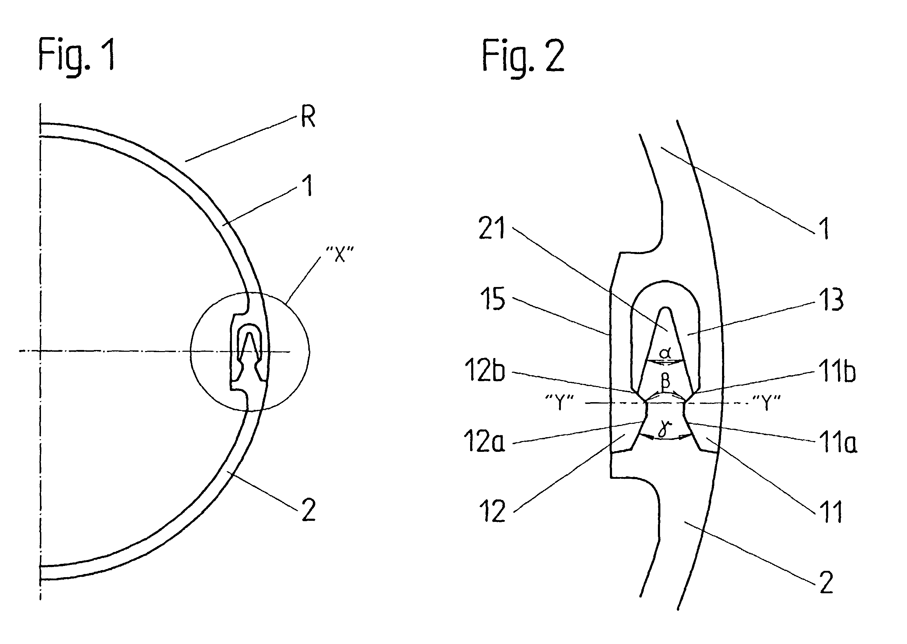

Die Figuren 1 und 2 zeigen beide einen Schnitt durch die Verbindungsstelle "X" der beiden Halbschalen 1 und 2 des erfindungsgemäßen Reparaturstückes R.

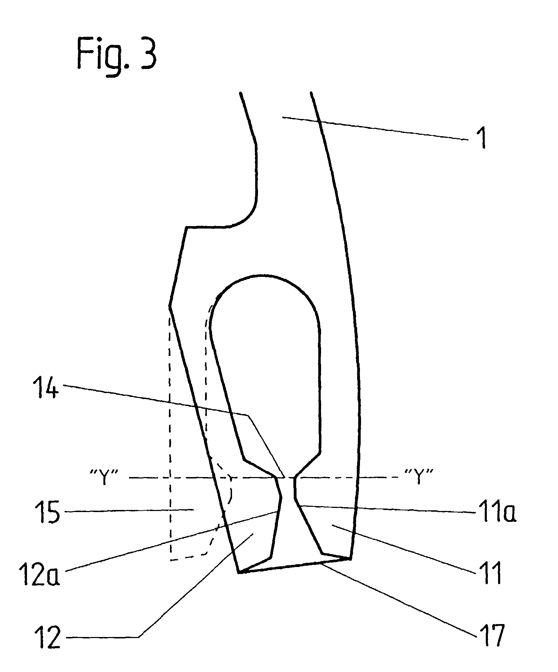

Im Bereich der Verbindungsstelle "X" ist der Halbschale 1 eine Nut 13 angeformt, deren innere Wand 15, federnd ausgebildet ist. In diese Nut 13 wird beim Zusammendrücken der beiden Halbschalen 1 und 2 die an der Stirnseite der Halbschale 2 angeformte Feder 21 in die Nut 13 gedrückt, wobei beim Passieren der Eintrittsöffnung 14 der Nut 13 die innere Wand 15 derselben in Richtung Rohrmittelpunkt etwas ausweicht, wie in Fig. 3 gestrichelt dargestellt, und sich nach dem Eindringen der Feder 21 wieder fest mit ihrem Zangenbacken 12 an deren Hals der Feder anlegt. Die Feder 21 wird dabei von den beiden ihren Hals umfassenden Zangenbacken 11 und 12 umfasst und ihrer Lage in der Nut 13 gehalten, ist somit verrastet und kann sich selbsttätig nicht lösen. Die Verbindung ist lösbar, indem beide Halbschalen 1 und 2 wieder auseinandergezogen werden. Dabei drückt der rückseitige Keil der Feder 21 die Zangenbacke 12 wieder nach innen und kann aus der Nut 13 gleiten. Das Reparaturstück R ist somit für einen weiteren Einsatz bereit.

Eine vorteilhafte Konfiguration der Verbindung beider Halbschalen 1 und 2 des Reparaturstückes R weist folgende Merkmale auf: Die Feder 21 ist doppelkeilförmig ausgebildet. Der vordere Keilwinkel der Feder auf deren Eintrittsseite weist einen Winkel α auf, der etwa zwischen 25° und 60° beträgt, während der rückseitige Keil β der Feder 21 einen Winkel <100°, vorzugsweise etwa 90° aufweist. Der Winkel r der Eintrittsflächen 11a,12a der Eintrittsöffnung 14 der Nut 13 sollte >α sein um ein leichtes Passieren der Feder 21 durch die Eintrittsöffnung 14 zu ermöglichen. Das von der verrasteten Feder 21 verdrängte Volumen der Nut 13 innerhalb des Durchdringungsquerschnittes Y-Y ist stets kleiner, als das Restvolumen der Nut. Die Flanken der Zangenbacken 11 und 12 können im Bereich der Eintrittsöffnung 14 sowohl schneidenförmig, als auch - in der Wirkstellung - zueinander parallel verlaufen. Die Gleitflächen 11a,12a und Rastflächen 11b,12b der Zangenbacken 11,12 und der Feder 21 haben sich zu entsprechen.

Um das Eindringen von Schmutz in die Nut 13 zu verhindern ist der federnde Zangenbacken 12 im Ruhezustand so zum Zangenbacken 11 hin geneigt, so daß die Eintrittsöffnung 14 der Nut 13 im Durchdringungsquerschnitt Y-Y geschlossen oder sehr eng, jedenfalls gegenüber der Wirkstellung mit verrasteter Feder 21 stark verringert ist.

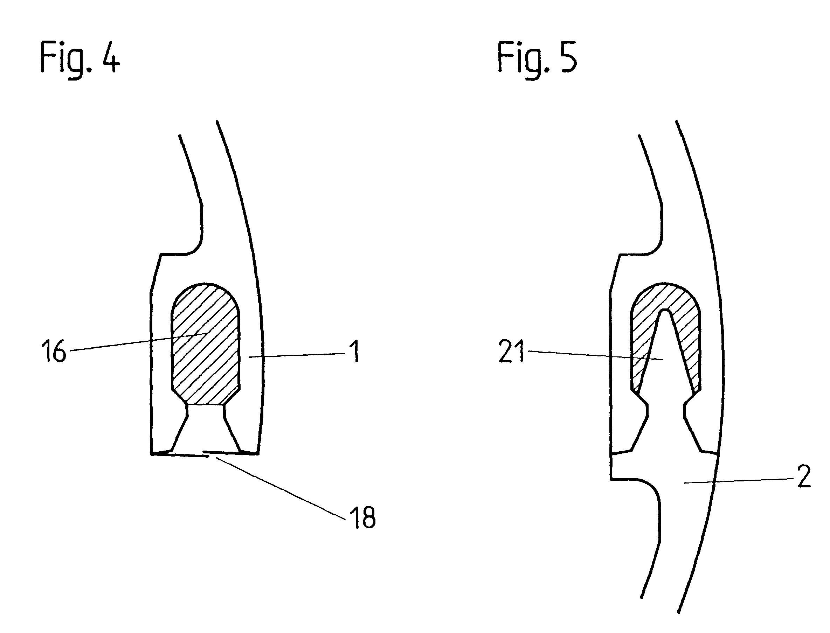

Die in den Figuren 4 und 5 dargestellten Ausführungsvarianten können zum Einsatz kommen, um ein Eindringen von Schmutz in die Nut 13 noch effektiver zu verhindern. Dazu wird beispielsweise ein Schaumstoffstreifen 16 oder dergl. mit großer Rückstellkraft und Kompressionsfähigkeit in die Nut 13 eingelegt der die Nut etwa bis zum Durchdringungsquerschnitt Y-Y ausfüllt. Beim Eindringen der Feder 21 wird dieser Schaumstoffstreifen komprimiert und nimmt nach dem Herausziehen der Feder 21 aus der Nut 13 wieder seine ursprüngliche Form an.

Die Nut 13 kann beispielsweise sowohl in der Ausführungsvariante der Fig. 1 bis 3 als auch der Ausführungsvariante der Fig. 4 und 5 mit einer Membran 17 oder 18 abgedeckt sein. Für die Ausführungsvariante gem. Fig 1 bis 3 eignet sich eine hochelastische Membran 17, die von der Feder 21 mit in die Nut 13 gezogen wird und somit das Eindringen von Schmutzpartikeln in die Nut verhindert, während für die Ausführungsvariante gem. der Fig. 4 und 5 eine geschlitzte Membran 18, die von der Feder 21 beim Eindringen in die Nut 13 durchdrungen wird, vorteilhafter ist.

Beide Halbschalen 1,2 können beispielsweise auch auf einer Seite mittels eines Gelenkes 19, beispielsweise eines Foliengelenkes verbunden und dadurch gegeneinander geschwenkt werden, während auf der anderen Seite eine Nut-Federverbindung 13,21 vorgesehen ist.

Um eine gewisse Gas- und Wasserdichtigkeit der Verbindung beider Halbschalen 1 und 2 zu erzielen, kann anstelle des Schaumstoffstreifens 16 auch ein Dichtmittel, beispielsweise eine Dichtschnur oder dergl. eingelegt werden.

### BEZUGSZEICHENLISTE

- 1: Halbschale
- 2: Halbschale
- 11: Zangenbacke
- 11a: Gleitfläche
- 11 b: Rastfläche
- 12: Zangenbacke
- 12a: Gleitflüge
- 12b: Rastfläche
- 13: Nut
- 14: Eintrittsöffnung
- 15: federnde Wand
- 16: Schaumstoffstreifen
- 17: Membranabdeckung
- 18: Abdeckung
- 19: Foliengelenk
- 21: Feder
- R: Reparaturstück
- Y-Y: Durchdringungsquerschnitt

## Patentansprüche

1. Aus zwei Halbschalen (1,2) bestehendes Reparaturstück für Kabelkanalrohre bei dem an den Berührungsflächen der beiden Halbschalen jeweils auf der einen Seite an der Stirnseite der ersten Halbschale (1) eine hinterschnittene Nut (13) vorgesehen ist, in die eine Feder (21) der Stirnseite der zweiten Halbschale (2) eingreift, **dadurch gekennzeichnet, dass** die erste Halbschale (1) und die zweite Halbschale (2) mittels mindestens einer Nut (13) und einer Feder (21) lösbar rastend miteinander verbunden sind, wobei an der Halbschale (1) die Eintrittsöffnung (14) der Nut (13) von zwei Zangenbacken (11,12) begrenzt ist, die Zangenbacken (11,12) schräg nach innen verlaufende Eintrittsflächen (11a,12a) und schräg nach außen verlaufende Rastflächen (11b,12b) für das Zusammenwirken mit der Feder (21) der zweiten Halbschale aufweisen, die Feder (21) doppelkeilförmig mit Eintrittsflächen und Rastflächen gestaltet ist, welche denjenigen der Zangenbacken (11,12) entsprechen, und die innere Wand (15) der Nut (13) federnd ausgebildet ist, wobei der Winkel γ der Eintrittsflächen (11a,12a) der Zangenbacken (11,12) und der Winkel β der Rastflächen (11b,12b) der Zangenbacken (11,12) und die Winkel der jeweils mit diesen Flächen korrespondierenden Flächen der Feder (21) einander entsprechen.

2. Reparaturstück nach Anspruch 1, **dadurch gekennzeichnet, daß** die beiden Halbschalen (1,2) auf einer Seite mittels einer Nut-Federverbindung (13,21) und auf der anderen Seite beweglich miteinander verbunden sind.

3. Reparaturstück nach Anspruch 1, **dadurch gekennzeichnet, daß** auf beiden Seiten der Halbschalen (1,2) eine Nut-Federverbindung (13,21) vorgesehen ist.

4. Reparaturstück nach Anspruch 1 bis 3, **dadurch gekennzeichnet, daß** der Keilwinkel ∝ der Feder (21) auf der Eintrittsseite etwa zwischen 25° und 60° und der Winkel β auf der Rastseite < 100° beträgt.

5. Reparaturstück nach Anspruch 1 bis 4, **dadurch gekennzeichnet, daß** das nach Einrasten der Feder (21) in der Nut (13) verbleibende Volumen derselben, innerhalb des Durchdringungsquerschnittes Y-Y größer ist, als das der Feder (21) innerhalb dieses Querschnittes.

6. Reparaturstück nach Anspruch 1 bis 5, **dadurch gekennzeichnet, daß** in die Nut (13) ein Schaumstoffstreifen (16) eingelegt ist, der nach Eintauchen der Feder (21) in die Nut (13) komprimiert wird und nach Entfernen der Feder (21) wieder seine ursprüngliche Gestalt annimmt.

7. Reparaturstück nach Anspruch 1 bis 6, **dadurch gekennzeichnet, daß** die beiden Halbschalen (1,2) auf einer Seite mittels eines Gelenkes (19) schwenkbar miteinander verbunden sind und auf der anderen Seite eine Nut-Federverbindung (13,21) besitzen.

8. Reparaturstück nach Anspruch 1 bis 7, **dadurch gekennzeichnet, daß** die Nut (13) von einer elastischen Membran (17) abgedeckt ist.

9. Reparaturstück nach Anspruch 1 bis 8, **dadurch gekennzeichnet, daß** die Nut (13) von einer geschlitzten Membran abgedeckt ist.

10. Reparaturstück nach Anspruch 1 bis 9, **dadurch gekennzeichnet, daß** der federnde Zangenbacken (12) in Ruhestellung so zum Zangenbacken (11) hin geneigt ist, daß die Eintrittsöffnung (14) der Nut (13) im Durchdringungsquerschnitt Y-Y geschlossen oder gegenüber der Wirkstellung stark verringert ist.

## Claims

1. Repair piece comprising two shells (1,2) for cable conduits, where, on the contact surfaces of the two shells, an undercut groove (13) is provided at one end on the face of the first shell (1) and a tongue (21) on the face of the second shell (2) engages in said groove (13), **characterised in that** the first shell (1) and the second shell (2) are detachably locked together by means of a tongue (21) and groove (13) and in the shell (1) the entry (14) to the groove (13) is bounded by two gripper jaws (11, 12), said gripper jaws (11, 12) having entry surfaces (11a, 12a) that taper and flared locking surfaces (11b, 12b), which engage with the tongue (21) of the second shell; that the tongue (21) is designed in a double-wedge shape with entry and locking surfaces, which correspond to those of the gripper jaws (11,12) and that the internal wall (15) of the groove (13) is flexible and the angle γ of the entry surfaces (11a, 12a) of the gripper jaws (11, 12) and the angle β of the locking surfaces (11b, 12b) of the gripper jaws (11, 12) and the angles of the surfaces of the tongue (21) that correspond to these surfaces, correspond to each other.

2. Repair piece according to claim 1, **characterised in that** the two shells (1, 2) are connected on one side by a tongue and groove joint (13, 21) and are flexibly connected to each other on the other side.

3. Repair piece according to claim 1, **characterised in that** a tongue and groove joint (13, 21) is provided on both sides of the shells (1, 2).

4. Repair piece according to claims 1-3, **characterised in that** the wedge angle ∝ of the tongue (21) is approximately between 25° and 60° on the entry side and the angle β on the engaging side is < 100°.

5. Repair piece according to claims 1-4, **characterised in that** the volume remaining in the groove (13) after the tongue (21) has engaged is greater in the penetration cross-section Y-Y than that of the tongue (21) within this cross-section.

6. Repair piece according to claims 1-5, **characterised in that** a strip of foam (16) is inserted in the groove (13), said foam being compressed when the tongue (21) is inserted into the groove (13) and resuming its original shape when the tongue (21) is removed.

7. Repair piece according to claims 1-6, **characterised in that** the two shells (1, 2) are pivoted on one side by means of a hinge (19) and have a tongue and groove joint (13, 21) on the other side.

8. Repair piece according to claims 1-7, **characterised in that** the groove (13) is covered by a flexible membrane (17).

9. Repair piece according to claims 1-8, **characterised in that** the groove (13) is covered by a slotted membrane.

10. Repair piece according to claims 1-9, **characterised in that** the sprung gripper jaw (12), in the rest position, is at an angle in relation to the gripper jaw (11) so that the entry (14) to the groove (13) is closed in the penetration cross-section Y-Y or is severely reduced compared with the active position.

## Revendications

1. Pièce de réparation constituée de deux semi-monocoques (1, 2) pour tubes de conduite de câbles sur laquelle, sur les surfaces de contact des deux semi-monocoques, une rainure (13) contre-dépouillée est prévue sur la face frontale de la première semi-monocoque (1) et dans laquelle un ressort (21) situé sur la face frontale de la seconde semi-monocoque (2) s'enfonce, se caractérisant par le fait que la première semi-monocoque (1) et la seconde semi-monocoque (2) sont raccordées par au moins une rainure (13) et un ressort (21) encliquetable. Sur la semi-monocoque (1), l'ouverture d'entrée (14) de la rainure (13) est limitée par deux becs de pince (11, 12) présentant des surfaces d'entrées (11a, 12a) obliques vers l'intérieur et des surfaces d'encliquetage (11b, 12b) obliques vers l'extérieur concourant avec le ressort (21) de la seconde semi-monocoque. Le ressort (21) comporte deux pointes avec surfaces d'entrée et d'encliquetage correspondant à celles des becs de pince (11, 12) et la paroi intérieure (15) de la rainure (13) est élastique. L'angle γ des surfaces d'entrée (11a, 12a) des becs de pince (11, 12), l'angle β des surfaces d'encliquetage (11b, 12b) des becs de pince (11, 12) et les angles des surfaces du ressort (21) correspondant à ces surfaces coïncident.

2. Pièce de réparation conformément à la revendication 1, se caractérisant par le fait que les deux semi-monocoques (1, 2) sont raccordées d'un côté par un raccord rainure-ressort (13, 21) et de l'autre côté de manière mobile.

3. Pièce de réparation conformément à la revendication 1, se caractérisant par le fait qu'un raccord rainure-ressort (13, 21) est prévu de chaque côté des semi-monocoques (1,2).

4. Pièce de réparation conformément aux revendications 1 à 3, se caractérisant par le fait que l'angle d'attaque α du ressort (21) situé côté entrée est compris entre 25° et 60° et que l'angle β côté encliquetage est < 100°.

5. Pièce de réparation conformément aux revendications 1 à 4, se caractérisant par le fait que le volume restant après l'encliquetage du ressort (21) dans la rainure (13), à l'intérieur de la section transversale de pénétration Y-Y est supérieur à celui du ressort (21) à l'intérieur de cette section transversale.

6. Pièce de réparation conformément aux revendications 1 à 5, se caractérisant par le fait que la rainure (13) abrite une bande de mousse (16) comprimée après l'introduction du ressort (21) dans la rainure (13) et reprenant sa forme initiale une fois le ressort (21) retiré.

7. Pièce de réparation conformément aux revendications 1 à 6, se caractérisant par le fait que les deux semi-monocoques (1, 2) sont reliées de manière pivotante d'un côté par une articulation (19) et présentent un raccord rainure-ressort (13, 21) de l'autre côté.

8. Pièce de réparation conformément aux revendications 1 à 7, se caractérisant par le fait que la rainure (13) est recouverte d'une membrane élastique (17).

9. Pièce de réparation conformément aux revendications 1 à 8, se caractérisant par le fait que la rainure (13) est recouverte d'une membrane fendue.

10. Pièce de réparation conformément aux revendications 1 à 9, se caractérisant par le fait qu'en position de repos, le bec de pince (12) élastique est penché vers le bec de pince (11) de sorte que l'ouverture d'entrée (14) de la rainure (13) est fermée dans la section transversale de pénétration Y-Y ou est fortement réduite par rapport à la position active.
